# EUROPÄISCHE PATENTANMELDUNG

(11) **EP 1 243 459 A2**
(43) Veröffentlichungstag der Anmeldung: **25.09.2002**
(21) Anmeldenummer: 02005533.1
(22) Anmeldetag: 11.03.2002
(51) Int. Cl.: B60L 7/22

(54) **Vom Netz unabhängige elektrische Bremse für eine Lokomotive**

(30) Priorität: 22.03.2001 DE 10114100
(71) Anmelder: SIEMENS AKTIENGESELLSCHAFT, 80333 München (DE)
(72) Erfinder: Haerer, Andreas, 91080 Uttenreuth (DE); Ropers, Diedrich, 91083 Baiersdorf (DE); Schieber, Christof, 91077 Neunkirchen am Brand (DE)

(57) **Zusammenfassung**

Die Erfindung betrifft eine vom Netz unabhängige elektrische Bremse für eine von einem Elektromotor (2) angetriebene Lokomotive. Die Bremse umfasst einen Bremswiderstand (15), der beim Bremsen vom Elektromotor (2) erzeugte elektrische Energie in Wärme umwandelt, und ein dem Elektromotor (2) netzseitig vorgeschaltetes Gleichrichtermodul (4n). Es ist vorgesehen, dass der Bremswiderstand (15) über Schalter (12, 14) mit dem Gleichrichtermodul (4n) verbunden ist.

## Beschreibung

Die Erfindung betrifft eine vom Netz unabhängige elektrische Bremse für eine von einem Elektromotor angetriebene Lokomotive mit einem Bremswiderstand, der beim Bremsen vom Elektromotor erzeugte elektrische Energie in Wärme umwandelt, und mit einem netzseitigen Gleichrichtermodul. Das Gleichrichtermodul wird als Vierquadrantensteller bezeichnet.

Lokomotive steht für jedes schienengebundene von einem Motor angetriebene Fahrzeug.

Statt des Bremswiderstandes können andere Bestandteile einer elektrodynamischen Bremse eingesetzt sein, z.B. einer Wirbelstrombremse.

Es ist bereits bekannt, eine Lokomotive mit einer sogenannten elektrischen Bremse auszustatten. Diese sieht vor, dass der Elektromotor der Lokomotive beim Bremsen kinetische Energie aufnimmt und, indem er als Generator arbeitet, in elektrische Energie umwandelt. Soweit das möglich ist, wird diese elektrische Energie in das Netz, das die Lokomotive versorgt, zurückgespeist.

Wechselstromnetze mit 15 kV und 16,7 Hz sind in der Regel durchgehend aufgebaut und können daher die elektrische Energie unbegrenzt aufnehmen. Netze mit 25 kV und 50 Hz sind in der Regel nicht durchgehend aufgebaut. Es gibt neutrale Zonen, in denen eine Rückspeisung unmöglich ist. Außerdem verbieten manche Energieversorgungsunternehmen die Einspeisung elektrischer Energie in das Netz.

Es ist daher erforderlich, Lokomotiven mit vom Netz unabhängigen elektrischen Bremsen auszustatten. Das gilt besonders beim Einsatz in Belgien oder Frankreich.

Um die während des Bremsvorganges vom Elektromotor erzeugte elektrische Energie abzubauen, ist bereits der Einsatz eines Bremswiderstandes bekannt. Dort wird die elektrische Energie in Wärme umgewandelt, die danach abgeführt wird. Bisher übliche Schaltungen mit Bremswiderständen erfordern spezielle Halbleitermodule, die den Bremswiderständen vorgeschaltet, einen zuverlässigen und steuerbaren Abbau der elektrischen Energie ermöglichen. Diese Halbleitermodule benötigen zusätzlichen Platz und verursachen Kosten.

Der Erfindung liegt die Aufgabe zugrunde, eine vom Netz unabhängige elektrische Bremse für eine Lokomotive anzugeben, die ohne solche zusätzlichen Halbleitermodule auskommt.

Die Aufgabe wird gemäß der Erfindung dadurch gelöst, dass der Bremswiderstand über Schalter mit dem netzseitigen Gleichrichtermodul verbunden ist.

Dem Elektromotor und seinem zugehörigen maschinenseitigen Wechselrichter sind stets ein oder mehrere netzseitige Gleichrichtermodule vorgeschaltet. Sie dienen zum Umformen der vom Netz zur Verfügung gestellten elektrischen Spannung für die Erfordernisse des Elektromotors. Im Bremsbetrieb werden nicht alle dieser netzseitigen Gleichrichtermodule benötigt. Folglich kann ein solches ohnehin vorhandenes Gleichrichtermodul für den Bremswiderstand zur Verfügung stehen. Die Schalter dienen zum Umschalten zwischen Fahrbetrieb und Bremsbetrieb.

Mit der Bremse nach der Erfindung wird der Vorteil erzielt, dass die vom Netz unabhängige elektrische Bremse ohne nur für den Bremswiderstand vorgesehenes Halbleitermodul auskommt.

Die Schalter sind beispielsweise über Schaltleitungen mit einer Vorrichtung zum Auslösen des Bremsbetriebs verbunden. Dadurch ist sichergestellt, dass im Bremsbetrieb sofort ein Gleichrichtermodul für den Bremswiderstand zur Verfügung steht. Die Vorrichtung zum Auslösen des Bremsbetriebs kann dabei der Bremshebel im Führerstand der Lokomotive sein.

Dem Gleichrichtermodul ist in der Regel netzseitig ein Transformator vorgeschaltet, der über Leitungen mit einem ersten und einem zweiten Anschluss des Gleichrichtermoduls verbunden ist. Beispielsweise ist in einer dieser Leitungen ein erster Schalter angeordnet und der erste Anschluss ist über einen zweiten Schalter mit dem Bremswiderstand verbunden.

Mit Hilfe der beiden genannten Schalter kann das Gleichrichtermodul für den Bremsbetrieb vom Transformator getrennt und an den Bremswiderstand angeschlossen werden. Auf diese Weise gelangt die elektrische Energie, die im Elektromotor beim Bremsen erzeugt wird, vorteilhafterweise über ein bereits vorhandenes Gleichrichtermodul zum Bremswiderstand.

Beispielsweise ist beim Fahren der erste Schalter geschlossen und der zweite Schalter ist offen. Beim Bremsen ist dann der erste Schalter offen und der zweite Schalter ist geschlossen. Mit dieser Schaltung wird der Vorteil erzielt, dass mit dem Gleichrichtermodul im Fahrbetrieb der Transformator und im Bremsbetrieb der Bremswiderstand verbunden ist. Der elektrische Motor der Lokomotive ist über den ihm zugeordneten maschinenseitigen Wechselrichter und den Zwischenkreis stets mit dem Gleichrichtermodul verbunden.

Mit der vom Netz unabhängigen elektrischen Bremse nach der Erfindung wird insbesondere der Vorteil erzielt, dass keine aufwendigen Bauteile, z.B. zusätzliche Halbleitermodule, zum Einsatz des Bremswiderstandes erforderlich sind.

Ein Ausführungsbeispiel für die elektrische Bremse nach der Erfindung wird anhand der Zeichnung näher erläutert:
FIG 1 zeigt die Bremse beim Fahren.
FIG 2 zeigt die Bremse beim Abbremsen der Lokomotive.

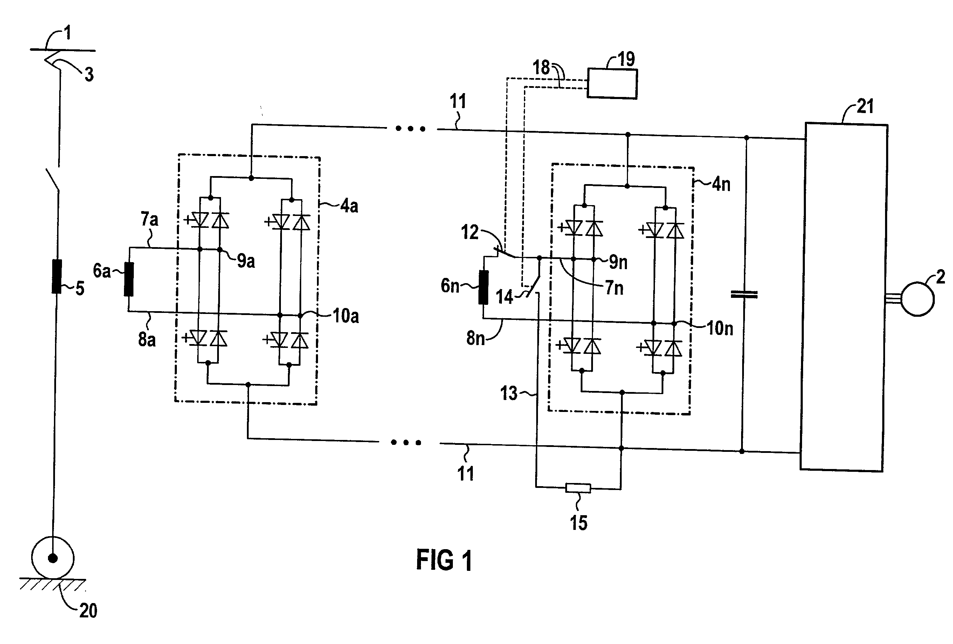

Vom Fahrdraht 1 aus wird im Fahrbetrieb (Figur 1) der Motor 2 einer Lokomotive mit elektrischer Energie versorgt. Zwischen dem Stromabnehmer 3, der dem Fahrdraht 1 zugeordnet ist, und der Schiene 20 ist die Primärwicklung 5 eines Transformators geschaltet. Sekundärwicklungen 6a bis 6n dieses Transformators stehen über jeweils zwei Leitungen 7a bis 7n und 8a bis 8n mit netzseitigen Gleichrichtermodulen 4a bis 4n, von denen nur zwei gezeigt sind, an einem ersten 9a bis 9n und an einem zweiten Anschluss 10a bis 10n in Verbindung. Alle Gleichrichtermodule 4a bis 4n sind über einen Zwischenkreis mit einem maschinenseitigen Wechselrichter 21 verbunden, an dem der Motor 2 angeschlossen ist.

An einem netzseitigen Gleichrichtermodul 4n ist in der ersten Leitung 7n ein erster Schalter 12 angeordnet, durch den die Verbindung der Sekundärwicklung 6n des Transformators mit dem netzseitige Gleichrichtermodul 4n unterbrochen werden kann. Der erste Anschluss 9n des netzseitigen Gleichrichtermoduls 4n steht über eine Verbindungsleitung 13, in der ein zweiter Schalter 14 angeordnet ist, mit einem Bremswiderstand 15 in Verbindung.

Die Schalter 12, 14 sind über Schaltleitungen 18 mit einer Vorrichtung 19 zum Auslösen des Bremsbetriebs verbunden, die ein Bremshebel im Führerstand der Lokomotive sein kann.

Im Fahrbetrieb (Figur 1) ist der erste Schalter 12 geschlossen und der zweite 14 ist offen. Dann ist die Sekundärwicklung 6n des Transformators mit dem Gleichrichtermodul 4n verbunden und der Bremswiderstand 15 ist abgekoppelt.

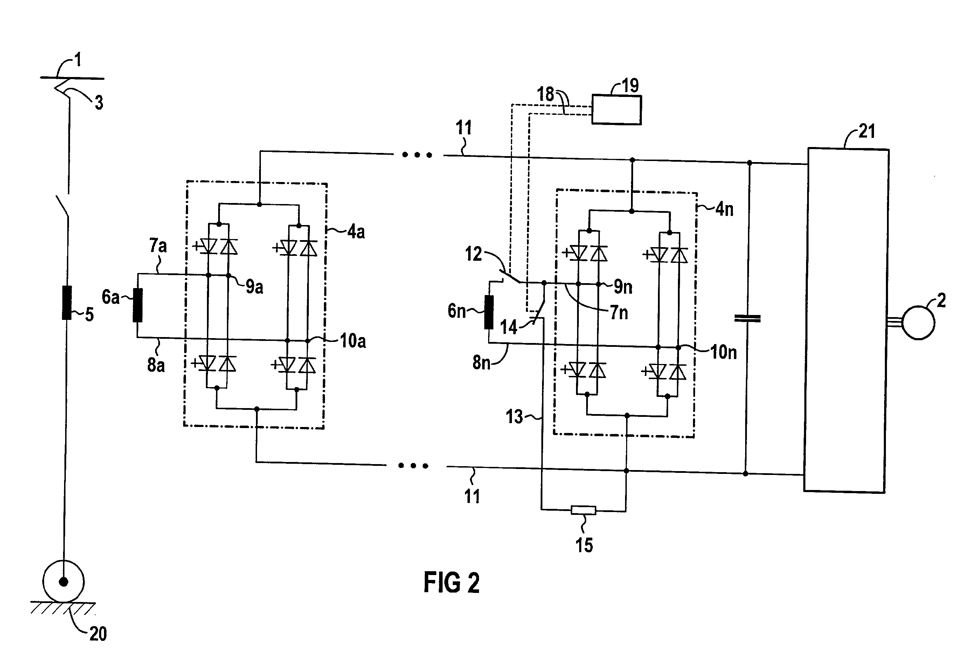

Beim Bremsen (Figur 2) ist der erste Schalter 12 geöffnet und der zweite Schalter 14 ist geschlossen. Dann ist die Sekundärwicklung 6n des Transformators vom Gleichrichtermodul 4n getrennt. Durch den geschlossenen Schalter 14 steht dann der Bremswiderstand 15 über das Gleichrichtermodul 4n mit dem als Generator arbeitenden Motor 2 in Verbindung. Die im Motor 2 erzeugte elektrische Energie kann auf diese Weise zuverlässig dem Bremswiderstand 15 zugeleitet werden, ohne dass ein zusätzliches Modul notwendig wäre.

## Patentansprüche

1. Vom Netz unabhängige elektrische Bremse für eine von einem Elektromotor (2) angetriebene Lokomotive mit einem Bremswiderstand (15), der beim Bremsen vom Elektromotor (2) erzeugte elektrische Energie in Wärme umwandelt, und mit einem netzseitigen Gleichrichtermodul (4n),
**dadurch gekennzeichnet, dass** der Bremswiderstand (15) über Schalter (12, 14), mit dem netzseitigen Gleichrichtermodul (4n) verbunden ist.

2. Bremse nach Anspruch 1,
**dadurch gekennzeichnet, dass** die Schalter (12, 14) über Schaltleitungen (18) mit einer Vorrichtung (19) zum Auslösen des Bremsbetriebs verbunden sind.

3. Bremse nach einem der Ansprüche 1 oder 2, wobei ein netzseitig dem Gleichrichtermodul (4n) vorgeschalteter Transformator über Leitungen (7n und 8n) mit einem ersten (9n) und einem zweiten Anschluss (10n) des Gleichrichtermoduls (4n) verbunden ist,
**dadurch gekennzeichnet, dass** in der Leitung (7n) ein erster Schalter (12) angeordnet ist und dass der erste Anschluss (9n) über einen zweiten Schalter (14) mit dem Bremswiderstand (15) verbunden sind.

4. Bremse nach Anspruch 3,
**dadurch gekennzeichnet, dass** beim Fahren der erste Schalter (12) geschlossen und der zweite Schalter (14) offen ist und dass beim Bremsen der erste Schalter (12) offen und der zweite Schalter (14) geschlossen ist.
